# EUROPEAN PATENT SPECIFICATION

(11) **EP 3 336 370 B1**
(45) Date of publication and mention of the grant of the patent: **08.09.2021**
(21) Application number: 17204448.9
(22) Date of filing: 29.11.2017
(51) Int. Cl.: F16C 33/78

(54) **CAM FOLLOWER AND YOKE ROLLER ASSEMBLIES**
NOCKENFOLGER- UND KREUZGELENKGABELANORDNUNGEN
ENSEMBLES À ROULEAUX POUR CULBUTEUR ET POUR FOURCHE DE CARDAN

(30) Priority: 30.11.2016 US 201662428099 P
(43) Date of publication of application: 20.06.2018
(73) Proprietor: Roller Bearing Company of America, Inc., Oxford, CT 06478 (US)
(72) Inventor: PRESCAVAGE, James, Hainsport, NJ New Jersey 08036 (US); PALLINI, Robert, Cheltenham, PA Pennsylvania 19012 (US); HARTNETT, Michael J., Middlebury, CT Connecticut 06762 (US); LUGOSI, Robert, Palm Beach Gardens, FL Florida 33418 (US); SMITH, Bradley T., Glastonbury, CT Connecticut 06033 (US); MANIA, Bogdan T., Lawrenceville, NJ New Jersey 08648 (US)
(74) Representative: Seemann & Partner Patentanwälte mbB

(56) References cited:
- US-A- 3 145 996
- US-A- 5 531 137
- US-A1- 2009 175 567

## Description

### Technical Field

The present invention is directed to a cam follower assembly and a yoke roller assembly and more specifically to a cam follower assembly and a yoke roller assembly having an axial thrust retainer, a double row of rolling elements and a thin profile seal.

### Background

Cam follower assemblies and yoke roller assemblies are used in many industrial manufacturing and conveying applications. The cam follower assemblies and the yoke roller assemblies each typically include an outer ring disposed around an inner ring with a plurality of rolling elements such as needle rollers disposed in a cavity therebetween. An annular seal is positioned on each axial end thereof, between the inner ring and the outer ring to keep debris from entering the cavity. The seals occupy an axial length of the cam follower assemblies and the yoke roller assemblies.

The size of the cam follower assemblies and yoke roller assemblies are generally limited to a predetermined envelope. For example, the axial length of cam follower assemblies may be limited a length of the cam that the cam follower rides on. The length of the yoke roller may be limited by the distance between yoke arms that the yoke roller is mounted on of on the length of the surface that the yoke roller engages. The length of the rolling elements is limited because of the axial length which the seals occupy. The outside diameter of the cam follower assemblies and the yoke roller assemblies may also be limited to a predetermined size.

Cam follower assemblies and yoke roller assemblies are subject to high loads when used in various applications. The load capacity of the cam follower assemblies and yoke roller assemblies depends on the diameter and length of the rolling elements disposed therein. However efforts to increase the load capacity of the cam follower assemblies and yoke roller assemblies have been plateaued because of the above described size limitations.

US 2009/175567 A1 teaches a cam follower assembly having an outer race and an inner race with rollers located between the outer and inner races. The surfaces of the inner race are lapped and subsequently treated using a cold plastic deformation process, in which a high energy flow of abrasive material in a carrier medium is applied to the metal surfaces of the inner race. Document US 2009/175567 shows a roller assembly with sealing means as described in the preamble of appended independent claim 1. US 3,145,996 A discloses another sealing device for sealing the interstice between spaced confronting surfaces of a pair of relatively rotatable members particularly suitable for a bearing assembly. Document US 3,145,996 shows a sealing means in a roller assembly as described in the preamble of appended independent claim 12.

Based on the foregoing, there is a need for cam follower assemblies and yoke roller assemblies with increased load capacity.

### Summary

According to the present disclosure there is provided a roller assembly as described in appended claim 1 and a thin profile seal as described in appended claim 12. Further preferred features of the present invention are described in the appended dependent claims.

### Brief Description of the Drawings

FIG. 1 is cross sectional view of a cam follower assembly of the present invention;
FIG. 2 is a cross sectional view a yoke roller assembly of the present invention;
FIG. 3 is an enlarged cross sectional view of a seal portion of the cam follower of FIG. 1 and the yoke roller of FIG. 2; and
FIG. 4 is front view of the split ring of the cam follower of FIG. 1 and the yoke roller of FIG. 2.

### Detailed Description

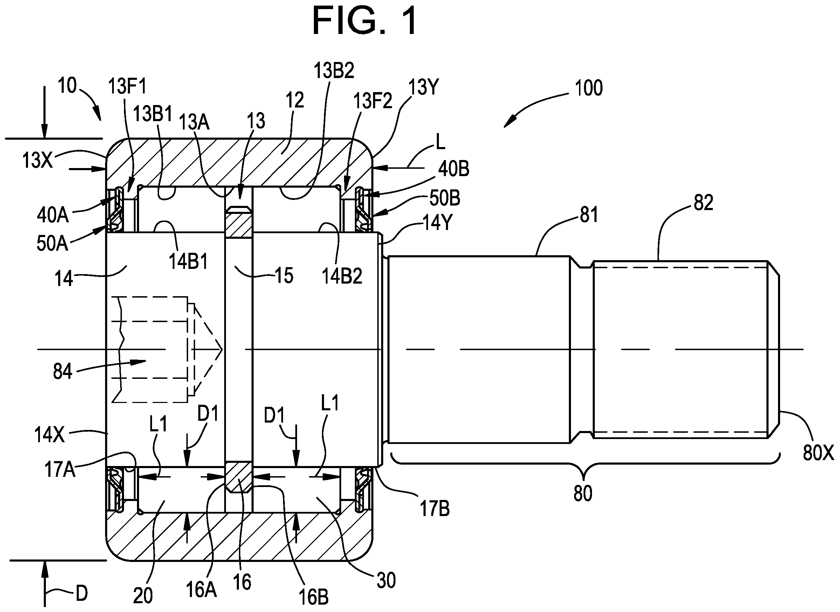

As shown in FIG. 1 a roller assembly for a cam follower 100 is generally designated by the reference number 10. The roller assembly 10 includes an outer ring 12 having an interior area 13. The interior area 13 is defined by an inner surface 13A extending an overall axial length L between a first axial end 13X and a second axial end 13Y of the outer ring 13. The inner surface 13A has a radially inward facing bearing surface 13B1, 13B2 extending between a first radially inwardly extending flange 13F1 and a second radially inwardly extending flange 13F2.

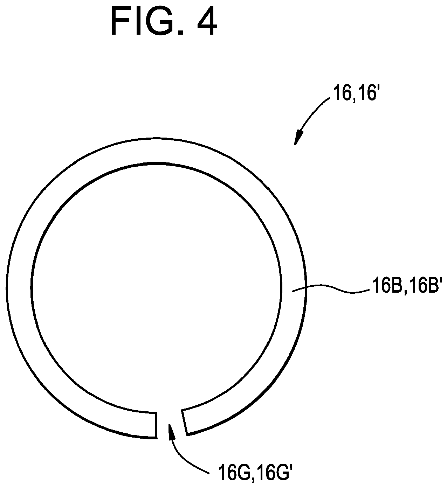

As shown in FIG. 1, the roller assembly 10 includes an inner member 14 extending into the interior area 13. The inner member 14 has a groove 15 formed therein and located between opposite axial ends 14X and 14Y of the inner member 14. A retaining ring 16 is positioned in the groove 15, as described herein. As shown in FIG. 4 the retaining ring 16 is a split ring having an annular body portion 16B and a gap 16G therein.

As shown in FIG. 1, the inner member 14 has a shaft 80 extending axially outward from the second axial end 14Y. The shaft 80 includes a shank portion 81 and a threaded portion 82. The threaded portion 82 extends axially inward from an axial end 80X of the shaft 80. In one embodiment the inner member 14 is manufactured from a carbon steel alloy. In one embodiment, the exterior surfaces 14B1 and 14B2 of the inner member have a carburized case hardened case depth of 0.762 mm (0.03 inches) to 1.016 mm (0.04 inches). In one embodiment, the exterior surfaces 14B1 and 14B2 have a surface hardness of 59 to 62 Rockwell C scale. In one embodiment, the inner member and/or the shaft 80 have a core hardness of 30 to 35 Rockwell C scale.

As shown in FIG. 1, the roller assembly 10 includes a first row of a plurality of first rollers 20 positioned in the interior area 13 and in rolling engagement with the inner member 14 (i.e., an exterior surface 14B1 of the inner member 14) and the radially inward facing bearing surface 13B1. The first row of the plurality first rollers 20 is positioned axially between and engaging the retaining ring 16 (i.e., a first axial end 16A of the retaining ring 16) and the first radially extending flange 13F1.

As shown in FIG. 1, the roller assembly 10 includes a second row of a plurality of second rollers 30 positioned in the interior area 13 and in rolling engagement with the inner member 14 (i.e., an exterior surface 14B2 of the inner member 14) and the radially inward facing bearing surface 13B2. The second row of the plurality of second rollers 30 is positioned axially between and engaging the retaining ring 16 (i.e., a second axial end 16B of the retaining ring 16) and the second radially extending flange 13F2.

Thus, the first axial end 16A, second axial end 16B, the first radially inwardly extending flange 13F1 and the second radially inwardly extending flange 13F2 limit axial movement of the outer ring 12 relative to the inner member 14.

As shown in FIG. 1, each of the plurality of first rollers 20 and each of the plurality of second rollers 30 have a roller length L1. In one embodiment, the ratio of roller length L to roller outside diameter D1 is less than 2.8 to provide increased load capacity compared to prior art roller assemblies. In one embodiment, the roller length L1 is about 1.041 mm (0.410 inches) and the dynamic load capacity of the roller assembly 10 is about 5,960 kg (13,140 pounds).

Each of the plurality of first rollers 20 and each of the plurality of second rollers 30 has an outside diameter D1 and the outer ring 12 has an outside diameter D. A ratio of the outside diameter D1 of the rollers 20, 30 to the second outside diameter D of the outer ring 12 ranges from 7.25 to 9.75.

As shown in FIG. 1, the inner surface 13A of the roller assembly 10 includes a first seal receiving pocket 40A formed between the first radially inwardly extending flange 13F1 and the first axial end 13X. A first annular seal 50A is positioned in and seated in the first seal receiving pocket 40A, as described herein. A portion (i.e., a radially innermost portion) of the first annular seal 50A slidingly and sealingly engages the inner member 14 (i.e., an exterior surface 17A of the inner member 14).

As shown in FIG. 1, the inner surface 13 of the roller assembly includes a second seal receiving pocket 40B formed between the second radially inwardly extending flange 13F2 and the second axial end 14Y. A second annular seal 50B is positioned in and seated in the second seal receiving pocket 40B. A portion (i.e., a radially innermost portion) of the first annular seal 50A slidingly and sealingly engages the inner member 14 (i.e., an exterior surface 17B of the inner member 14).

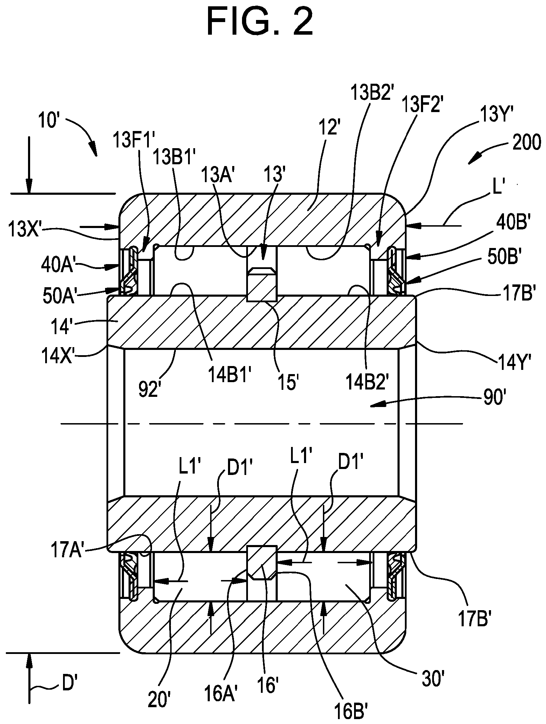

As shown in FIG. 2 a roller assembly for a yoke roller 200 is generally designated by the reference number 10'. The roller assembly 10' includes an outer ring 12' having an interior area 13'. The interior area 13' is defined by an inner surface 13A' extending an overall axial length L' between a first axial end 13X' and a second axial end 13Y' of the outer ring 12'. The inner surface 13A' has a radially inward facing bearing surface 13B1', 13B2' extending between a first radially inwardly extending flange 13F1' and a second radially inwardly extending flange 13F2'.

As shown in FIG. 2, the roller assembly 10' includes an inner member 14' extending into the interior area 13'. The inner member 14' has a groove 15' formed therein and located between opposite axial ends 14X and 14Y' of the inner member 14'. A retaining ring 16' is positioned in the groove 15', as described herein. As shown in FIG. 4 the retaining ring 16' is a split ring having an annular body portion 16B' and a gap 16G' therein.

As shown in FIG. 2, the inner member 14' has a bore 90' extending therethrough. The bore 90' is defined by an inner surface 92' of the inner member 14'. In one embodiment, the inner member 14' is manufactured from a carbon steel alloy. In one embodiment, the exterior surfaces 14B1' and 14B2' of the inner member 14' have a carburized case hardened case depth of 0.762 mm (0.03 inches) to 1.016 mm (0.04 inches). In one embodiment, the exterior surfaces 14B1' and 14B2' have a surface hardness of 59 to 62 Rockwell C scale. In one embodiment, the inner member 14' has a core hardness of 30 to 35 Rockwell C scale.

As shown in FIG. 2, the roller assembly 10' includes a first row of a plurality of first rollers 20' positioned in the interior area 13' and in rolling engagement with the inner member 14' (i.e., an exterior surface 14B1' of the inner member 14') and the radially inward facing bearing surface 13B1'. The first row of the plurality first rollers 20' is positioned axially between and engaging the retaining ring 16' (i.e., a first axial end 16A' of the retaining ring 16') and the first radially extending flange 13F1'.

As shown in FIG. 2, the roller assembly 10' includes a second row of a plurality of second rollers 30' positioned in the interior area 13' and in rolling engagement with the inner member 14' (i.e., an exterior surface 14B2' of the inner member 14') and the radially inward facing bearing surface 13B2'. The second row of the plurality second rollers 30' is positioned axially between and engaging the retaining ring 16' (i.e., a second axial end 16B' of the retaining ring 16') and the second radially extending flange 13F2'.

Thus, the first axial end 16A', second axial end 16B', the first radially inwardly extending flange 13F1' and the second radially inwardly extending flange 13F2' limit axial movement of the outer ring 12' relative to the inner member 14'.

As shown in FIG. 2, each of the plurality of first rollers 20' and each of the plurality of second rollers 30' have a roller length L1'. The ratio of roller length to roller outside diameter is less than 2.8 to provide increased load capacity compared to prior art roller assemblies. In one embodiment, the roller length L1' is about 1.041 mm (0.410 inches) and the dynamic load capacity of the roller assembly 10' is about 5,960 kg (13,140 pounds).

Each of the plurality of first rollers 20' and each of the plurality of second rollers 30' has an outside diameter D1' and the outer ring 12 has an outside diameter D'. A ratio of the outside diameter D1' of the rollers 20', 30' to the second outside diameter D' of the outer ring 12' ranges from 7.25 to 9.75.

As shown in FIG. 2, the inner surface 13A' of the roller assembly 10' includes a first seal receiving pocket 40A' formed between the first radially inwardly extending flange 13F1' and the first axial end 13X'. A first annular seal 50A' is positioned in and seated in the first seal receiving pocket 40A', as described herein. A portion (i.e., a radially innermost portion) of the first annular seal 50A' slidingly and sealingly engages the inner member 14' (i.e., an exterior surface 17A' of the inner member 14').

As shown in FIG. 2, the inner surface 13' of the roller assembly 10' includes a second seal receiving pocket 40B' formed between the second radially inwardly extending flange 13F2' and the second axial end 14Y'. A second annular seal 50B' is positioned in and seated in the second seal receiving pocket 40B'. A portion (i.e., a radially innermost portion) of the first annular seal 50A' slidingly and sealingly engages the inner member 14' (i.e., an exterior surface 17B' of the inner member 14').

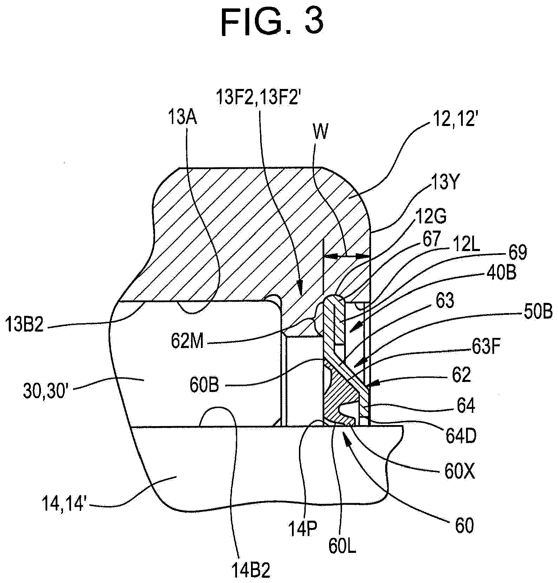

As shown in FIG. 3, the second annular seal 50B has an overall axial width W. The second annular seal 50B has a designed overall axial width W that consumes only 6% of the overall axial length L. The first annular seal 50A is configured similar to the second annular seal 50B and has the same thinness ratio as the second annular seal 50B. While the overall axial widths W of the first annular seal 50A and the second annular seal 50B are described as being equal, the present invention is not limited in this regard.

As shown in FIG. 3, a groove 12G is formed in the inner surface 13A of the outer ring 12 axially outward of the second radially inwardly extending flange 13F2 and a lip 12L extending radially inward proximate the second axial end 13Y of the outer ring 12.

As best shown in FIG. 3, the second annular seal 50B is a thin profile seal that includes an elastomeric member 60 secured to an annular metallic ring 62. The annular metallic ring 62 has a mounting section 62M located circumferentially around a radially outermost portion of thereof. The metallic annular ring 62 has a first leg 63 extending axially away and radially inward from the mounting section 62M. The first leg 63 has a radially and axially inward facing sloped surface 63F. The metallic annular ring 62 has a second leg 64 extending radially inward from the first leg 63 and terminating at a distal end 64D. The mounting section 62M includes a flap 69 folded over a portion of the mounting section 62M and forming a bend 67 on a radially outermost portion of the mounting section 62M for seating in the groove 12G of the outer ring 12 of the roller assembly 10.

As best shown in FIG. 3, the elastomeric member 60 has a base 60B secured to the radially and axially inward facing sloped surface 63F. The elastomeric member 60 has a flexible sealing leg 60L extending away from the base 60B and the radially and axially inward facing sloped surface 63F for sealing engagement with a portion of the exterior surface 17B of the inner member 14 of the roller assembly 10. The flexible sealing leg 60L terminating at a sealing engagement surface 60X thereof. The sealing engagement surface 60X extends radially inward from the distal end 64D of the second leg 64. The metallic annular ring 62 and the elastomeric member 60 have an overall axial width W configured to provide structural support and sealing.

The first annular seal 50A and the second annular seal 50B each have an overall axial width is from about 1.905 mm (0.075 inches) to about 2.032 mm (0.080 inches). The designed thinness of the first and second annular seals 50A and 50B provides for extension of roller length, thereby yielding increased load capacity. The first annular seal 50A and the second annular seal 50B each have a designed axial width W which consumes no more than 6% of the overall length L of the outer ring.

The first annular seals 50A, 50A' and the second annular seal 50B' are configured the same as the second annular seal 50B.

Although the invention has been described with reference to particular embodiments thereof, it will be understood by one of ordinary skill in the art, upon a reading and understanding of the foregoing disclosure that numerous variations and alterations to the disclosed embodiments will fall within the scope of this invention and of the appended claims.

## Claims

1. A roller assembly (10) for a cam follower (100) or a yoke roller (200), the roller assembly (10) comprising:
an outer ring (12) having an interior area (13), the interior area (13) being defined by an inner surface (13A) extending an overall axial length (L) between a first axial end (13X) and a second axial end (13Y) of the outer ring (12), the inner surface (13A) having a radially inward facing bearing surface (13B1, 13B2) extending between a first radially inwardly extending flange (13F1) and a second radially inwardly extending flange (13F2);
a one piece inner member (14) extending into the interior area (13), the inner member (14) having a groove (15) formed therein between a third axial end (14X) and a fourth axial end (14Y) of the inner member (14), the inner member (14) extending continually between the third axial end (14X) and the fourth axial end (14Y):
a retaining ring (16) positioned in the groove (15);
a first row of a plurality of first rollers (20) positioned in the interior area (13) between and in rolling engagement with the inner member (14) and the radially inward facing bearing surface (13B1, 13B2), the first row of the plurality first rollers (20) being positioned between and engaging the retaining ring (16) and the first radially inwardly extending flange (13F1);
a second row of a plurality of second rollers (30) positioned in the interior area (13) between and in rolling engagement with the inner member (14) and the radially inward facing bearing surface (13B1, 13B2), the second row of the plurality second rollers (30) being positioned between and engaging the retaining ring (16) and the second radially inwardly extending flange (13F2);
the inner surface (13A) further comprises a first seal receiving pocket (40A) formed between the first radially inwardly extending flange (13F1) and the first axial end (13X); and
a first annular seal (50A) positioned in and seated in the first seal receiving pocket (40A), a portion of the first annular seal (50A) slidingly and sealingly engaging the inner member (14);
**characterized in that** the first annular seal (50A) comprises:
a metallic annular ring (62) having a mounting section (62M) located circumferentially around a radially outermost portion thereof, the metallic annular ring (62) having a first leg (63) extending axially away and radially inward from the mounting section (62M), the first leg (63) having a radially and axially inward facing sloped surface (63F), and the metallic annular ring (62) having a second leg (64) extending radially inward from the first leg (63) and terminating at a distal end (64D);
an elastomeric member (60) having a base (60B) secured to the radially and axially inward facing sloped surface (63F), the elastomeric member (60) having a flexible sealing leg (60L) extending away from the radially and axially inward facing sloped surface (63F) for sealing engagement with the inner member (14) of the roller assembly (10), the flexible sealing leg (60L) terminating at a sealing engagement surface (60X), the sealing engagement surface (60X) extends radially inward from the distal end (64D) of the second leg (64);
the metallic annular ring (62) and the elastomeric member (60) having an overall axial width (W) configured to provide structural support and sealing, and,
each of the plurality of first rollers (20) and each of the plurality of second rollers (30) having a roller length (LI) and a roller outside diameter (D1);
wherein a ratio of the roller length (LI) to the roller outside diameter (D1) is less than 2.8;
the outer ring (12) having a second outside diameter (D);
wherein a ratio of the second outside diameter (D) to the roller outside diameter (D1) ranges from 7.25 to 9.75, the first annular seal (50A) having a first overall axial width, the first overall axial width (W) being no more than 6% of the overall axial length (L) of the outer ring (12).

2. The roller assembly (10) of claim 1, wherein the overall axial width (W) is from about 1.905 mm (0.075 inches) to about 2.032 mm (0.080 inches), to facilitate the extension of roller length without increase in overall length of the roller assembly (10), yielding increased load capacity of the roller assembly (10).

3. The roller assembly (10) of claim 2, wherein the mounting section (62M) comprises a flap (69) folded over a portion of the mounting section (62M) and forming a bend (67) on a radially outermost portion of the mounting section (62M) for seating in a groove (12G) of the outer ring (12) of the roller assembly (10).

4. The roller assembly (10) of claim 1, wherein:
the inner surface (13A) further comprises a second seal receiving pocket (40B) formed between the second radially inwardly extending flange (13F2) and the second axial end (13Y); and
a second annular seal (50B) positioned in and seated in the second seal receiving pocket (40B), a portion of the second annular seal (50B) slidingly and sealingly engaging the inner member (14), the second annular seal (50B) having a first overall axial width; and
the second annular seal (50B) having an overall axial width that is no more than 6% of the overall length of the outer ring (12).

5. The roller assembly (10) of claim 1, wherein the second annular seal (50B) comprises an elastomeric member (60) secured to an annular metallic ring (62).

6. The roller assembly (10) of claim 1, wherein the inner member (14) comprises a carbon steel.

7. The roller assembly (10) of claim 1, wherein a portion of the inner member (14) has a carburized case hardened case depth of 0.762 to 1.016 mm (0.03 to 0.04 inches).

8. The roller assembly (10) of claim 1, wherein the inner member (14) has a surface hardness of 59 to 62 Rockwell C scale and/or the inner member (14) has a core hardness of 30 to 35 Rockwell C scale.

9. The roller assembly (10) of claim 1, wherein axial ends (16A. 16B) of the retaining ring (16) engage the groove (15), the plurality of first rollers (20) slidingly engage one of the axial ends (16A. 16B) of the retaining ring (16) and the plurality of second rollers (30) slidingly engage another of the axial ends (16A. 16B) of the retaining ring (16) to limit axial movement of the outer ring (12) relative to the inner member (14).

10. The roller assembly (10) of claim 1, wherein the inner member (14) comprises a shaft (80) that extends outwardly from at least one of the first axial end (13X) and the second axial end (13Y).

11. The roller assembly (10) of claim 1, wherein the inner member (14) is an annular ring.

12. A roller assembly (10) and a thin profile seal assembly,
the roller assembly (10) comprising: an outer ring (12), an inner ring (14) and rollers (30) therebetween,
the thin profile seal (50B) comprising:
a metallic annular ring (62) having a mounting section (62M) located circumferentially around a radially outermost portion of thereof, the metallic annular ring (62) having a first leg (63) extending axially away and radially inward from the mounting section (62M), the first leg (63) having a radially and axially inward facing sloped surface (63F), and the metallic annular ring (62) having a second leg (64) extending radially inward from the first leg (63) and terminating at a distal end (64D);
an elastomeric member (60) having a base (60B) secured to the radially and axially inward facing sloped surface (63F),
**characterized in that**
the elastomeric member (60) has a flexible sealing leg (60L) extending away from the radially and axially inward facing sloped surface (63F) for sealing engagement with an inner member (14) of the roller assembly (10), the flexible sealing leg (60L) terminating at a sealing engagement surface (60X), the sealing engagement surface (60X) extends radially inward from the distal end (64D) of the second leg (64);
the metallic annular ring (62) and the elastomeric member (60) having an overall axial width (W) configured to provide structural support and sealing, and
the thin profile seal having a first overall axial width (W), the first overall axial width (W) being no more than 6% of the overall axial length (L) of an outer ring (12) of the roller assembly (10).

13. The roller assembly and thin profile seal assembly of claim 12, wherein the overall axial width is from about 1.905 mm (0.075 inches) to about 2.032 mm (0.080 inches), to facilitate the extension of roller length without increase in overall length of the roller assembly (10), yielding increased load capacity of the roller assembly (10).

14. The roller assembly and thin profile seal assembly of claim 13, wherein the mounting section (62M) comprises a flap (69) folded over a portion of the mounting section (62M) and forming a bend (67) on a radially outermost portion of the mounting section (62M) for seating in a groove (12G) of an outer ring (12) of the roller assembly (10).

15. The roller assembly and thin profile seal assembly of claim 12 installed in a roller assembly for a cam follower or yoke assembly, the roller assembly comprising:
an outer ring (12) having an interior area (13), the interior area (13) being defined by an inner surface (13A) extending an overall axial length (L) between a first axial end (13X) and a second axial end (13Y) of the outer ring (12), the inner surface (13A) having a radially inward facing bearing surface (13B1, 13B2) extending between a first radially inwardly extending flange (13F1) and a second radially inwardly extending flange (13F2);
a one piece inner member (14) extending into the interior area (13), the inner member (14) having a groove (15) formed therein between a third axial end (14X) and a fourth axial end (14Y) of the inner member (14), the inner member (14) extending continually between the third axial end (14X) and the fourth axial end (14Y):
a retaining ring (16) positioned in the groove (15);
a first row of a plurality of first rollers (20) positioned in the interior area (13) between and in rolling engagement with the inner member (14) and the radially inward facing bearing surface (13B1, 13B2), the first row of the plurality first rollers (20) being positioned between and engaging the retaining ring (16) and the first radially inwardly extending flange (13F1);
a second row of a plurality of second rollers (30) positioned in the interior area (13) between and in rolling engagement with the inner member (14) and the radially inward facing bearing surface (13B1, 13B2), the second row of the plurality second rollers (30) being positioned between and engaging the retaining ring (16) and the second radially inwardly extending flange (13F2);
the inner surface (13A) further comprises a first seal receiving pocket (40A) formed between the first radially inwardly extending flange (13F1) and the first axial end (13X); and
a first annular seal (50A) positioned in and seated in the first seal receiving pocket (40A), a portion of the first annular seal (50A) slidingly and sealingly engaging the inner member (14);
**characterized in that**
each of the plurality of first rollers (20) and each of the plurality of second rollers (30) have a roller length (L1) and a roller outside diameter (D1);
a ratio of the roller length (L1) to the roller outside diameter (D1) is less than 2.8;
the outer ring (12) has a second outside diameter (D);
a ratio of the second outside diameter (D) to the roller outside diameter (D1) ranges from 7.25 to 9.75.

## Patentansprüche

1. Laufrollenanordnung (10) für einen Nockenfolger (100) oder eine Kreuzgelenkgabel (200), wobei die Laufrollenanordnung (10) Folgendes umfasst:
einen Außenring (12), der einen Innenbereich (13) aufweist, wobei der Innenbereich (13) durch eine Innenfläche (13A) bestimmt ist, die sich über eine axiale Gesamtlänge (L) zwischen einem ersten axialen Ende (13X) und einem zweiten axialen Ende (13Y) des Außenrings (12) erstreckt, wobei die Innenfläche (13A) eine radial nach innen gewandte Lagerfläche (13B1, 13B2) aufweist, die sich zwischen einem ersten sich radial nach innen erstreckenden Flansch (13F1) und einem zweiten sich radial nach innen erstreckenden Flansch (13F2) erstreckt;
ein einstückiges inneres Element (14), das sich in den Innenbereich (13) hinein erstreckt, wobei das innere Element (14) eine Nut (15) aufweist, die darin zwischen einem dritten axialen Ende (14X) und einem vierten axialen Ende (14Y) des inneren Elements (14) gebildet ist, wobei sich das innere Element (14) durchgehend zwischen dem dritten axialen Ende (14X) und dem vierten axialen Ende (14Y) erstreckt;
einen Haltering (16), der in der Nut (15) positioniert ist;
eine erste Reihe aus einer Vielzahl von ersten Rollen (20), die in dem Innenbereich (13) zwischen und in Rolleingriff mit dem inneren Element (14) und der radial nach innen gewandten Lagerfläche (13B1, 13B2) positioniert ist, wobei die erste Reihe aus der Vielzahl von ersten Rollen (20) zwischen dem Haltering (16) und
dem ersten sich radial nach innen erstreckenden Flansch (13F1) positioniert ist und diese in Eingriff nimmt;
eine zweite Reihe aus einer Vielzahl von zweiten Rollen (30), die in dem Innenbereich (13) zwischen und in Rolleingriff mit dem inneren Element (14) und der radial nach innen gewandten Lagerfläche (13B1, 13B2) positioniert ist, wobei die zweite Reihe aus der Vielzahl von zweiten Rollen (30) zwischen dem Haltering (16) und dem zweiten sich radial nach innen erstreckenden Flansch (13F2) positioniert ist und diese in Eingriff nimmt;
wobei die Innenfläche (13A) ferner eine erste Dichtungsaufnahmetasche (40A) umfasst, die zwischen dem ersten sich radial nach innen erstreckenden Flansch (13F1) und dem ersten axialen Ende (13X) gebildet ist; und
eine erste kranzförmige Dichtung (50A), die in der ersten Dichtungsaufnahmetasche (40A) positioniert und darin eingesetzt ist, wobei ein Teil der ersten kranzförmigen Dichtung (50A) das innere Element (14) gleitend und abdichtend in Eingriff nimmt, **dadurch gekennzeichnet, dass**
die erste kranzförmige Dichtung (50A) Folgendes umfasst:
einen kranzförmigen Metallring (62), der einen Anbringungsabschnitt (62M) aufweist, der in Umfangsrichtung um einen radial äußersten Teil davon angeordnet ist, wobei der kranzförmige Metallring (62) einen ersten Schenkel (63) aufweist, der sich von dem Anbringungsabschnitt (62M) axial weg und radial nach innen erstreckt, wobei der erste Schenkel (63) eine radial und axial nach innen gewandte geneigte Fläche (63F) aufweist, und wobei der kranzförmige Metallring (62) einen zweiten Schenkel (64) aufweist, der sich von dem ersten Schenkel (63) radial nach innen erstreckt und an einem distalen Ende (64D) endet;
ein elastomeres Element (60), das eine Basis (60B) aufweist, die an der radial und axial nach innen gewandten geneigten Fläche (63F) befestigt ist, wobei das elastomere Element (60) einen flexiblen Dichtungsschenkel (60L) aufweist, der sich zum abdichtenden Eingriff mit dem inneren Element (14) der Laufrollenanordnung (10) weg von der radial und axial nach innen gewandten geneigten Fläche (63F) erstreckt, wobei der flexible Dichtungsschenkel (60L) an einer Dichtungseingriffsfläche (60X) endet, wobei sich die Dichtungseingriffsfläche (60X) von dem distalen Ende (64D) des zweiten Schenkels (64) radial nach innen erstreckt;
wobei der kranzförmige Metallring (62) und das elastomere Element (60) eine axiale Gesamtbreite (W) aufweisen, die so ausgestaltet ist, dass sie strukturelle Verstärkung und Abdichtung vorsieht, und
wobei jede der Vielzahl von ersten Rollen (20) und jede der Vielzahl von zweiten Rollen (30) eine Rollenlänge (L1) und einen Rollenaußendurchmesser (D1) aufweist;
wobei ein Verhältnis von der Rollenlänge (L1) zum Rollenaußendurchmesser (D1) weniger als 2,8 beträgt;
wobei der Außenring (12) einen zweiten Außendurchmesser (D) aufweist;
wobei ein Verhältnis von dem zweiten Außendurchmesser (D) zum Rollenaußendurchmesser (D1) im Bereich von 7,25 bis 9,75 liegt, wobei die erste kranzförmige Dichtung (50A) eine erste axiale Gesamtbreite (W) aufweist, die nicht mehr als 6 % der axialen Gesamtlänge (L) des Außenrings (12) beträgt.

2. Laufrollenanordnung (10) nach Anspruch 1, wobei die axiale Gesamtbreite (W) etwa 1,905 mm (0,075 Zoll) bis etwa 2,032 mm (0,080 Zoll) beträgt, um die Vergrößerung der Rollenlänge ohne Zunahme der Gesamtlänge der Laufrollenanordnung (10) zu ermöglichen, wodurch sich eine erhöhte Belastbarkeit der Laufrollenanordnung (10) ergibt.

3. Laufrollenanordnung (10) nach Anspruch 2, wobei der Anbringungsabschnitt (62M) eine Wulst (69) umfasst, die über einen Teil des Anbringungsabschnitts (62M) gefaltet ist und einen Bogen (67) an einem radial äußersten Teil des Anbringungsabschnitts (62M) zum Einsetzen in eine Nut (12G) des Außenrings (12) der Laufrollenanordnung (10) bildet.

4. Laufrollenanordnung (10) nach Anspruch 1, wobei:
die Innenfläche (13A) ferner eine zweite Dichtungsaufnahmetasche (40B) umfasst, die zwischen dem zweiten sich radial nach innen erstreckenden Flansch (13F2) und dem zweiten axialen Ende (13Y) gebildet ist; und
eine zweite kranzförmige Dichtung (50B) in der zweiten Dichtungsaufnahmetasche (40B) positioniert und darin eingesetzt ist, wobei ein Teil der zweiten kranzförmigen Dichtung (50B) das innere Element (14) gleitend und abdichtend in Eingriff nimmt, wobei die zweite kranzförmige Dichtung (50B) eine erste axiale Gesamtbreite aufweist; und
die zweite kranzförmige Dichtung (50B) eine axiale Gesamtbreite aufweist, die nicht mehr als 6 % der Gesamtlänge des Außenrings (12) beträgt.

5. Laufrollenanordnung (10) nach Anspruch 1, wobei die zweite kranzförmige Dichtung (50B) ein elastomeres Element (60) umfasst, das an einem kranzförmigen Metallring (62) befestigt ist.

6. Laufrollenanordnung (10) nach Anspruch 1, wobei das innere Element (14) einen Kohlenstoffstahl umfasst.

7. Laufrollenanordnung (10) nach Anspruch 1, wobei ein Teil des inneren Elements (14) eine Aufkohlungszonen-Härteschichttiefe von 0,762 bis 1,016 mm (0,03 bis 0,04 Zoll) aufweist.

8. Laufrollenanordnung (10) nach Anspruch 1, wobei das innere Element (14) eine Oberflächenhärte von 59 bis 62 nach Rockwell C-Skala aufweist und/oder das innere Element (14) eine Kernhärte von 30 bis 35 nach Rockwell C-Skala aufweist.

9. Laufrollenanordnung (10) nach Anspruch 1, wobei axiale Enden (16A, 16B) des Halterings (16) die Nut (15) in Eingriff nehmen, die Vielzahl von ersten Rollen (20) eines von den axialen Enden (16A, 16B) des Halterings (16) gleitend in Eingriff nehmen und die Vielzahl von zweiten Rollen (30) ein anderes von den axialen Enden (16A, 16B) des Halterings (16) gleitend in Eingriff nehmen, um eine axiale Bewegung des Außenrings (12) in Bezug auf das innere Element (14) zu begrenzen.

10. Laufrollenanordnung (10) nach Anspruch 1, wobei das innere Element (14) eine Welle (80) umfasst, die sich von mindestens einem von dem ersten axialen Ende (13X) und dem zweiten axialen Ende (13Y) nach außen erstreckt.

11. Laufrollenanordnung (10) nach Anspruch 1, wobei das innere Element (14) ein kranzförmiger Ring ist.

12. Laufrollenanordnung (10) und Dünnprofildichtungsanordnung,
wobei die Laufrollenanordnung (10) einen Außenring (12), einen Innenring (14) und Rollen (30) dazwischen umfasst,
wobei die Dünnprofildichtung (50B) Folgendes umfasst:
einen kranzförmigen Metallring (62), der einen Anbringungsabschnitt (62M) aufweist, der in Umfangsrichtung um einen radial äußersten Teil davon angeordnet ist, wobei der kranzförmige Metallring (62) einen ersten Schenkel (63) aufweist, der sich von dem Anbringungsabschnitt (62M) axial weg und radial nach innen erstreckt, wobei der erste Schenkel (63) eine radial und axial nach innen gewandte geneigte Fläche (63F) aufweist, und wobei der kranzförmige Metallring (62) einen zweiten Schenkel (64) aufweist, der sich von dem ersten Schenkel (63) radial nach innen erstreckt und an einem distalen Ende (64D) endet;
ein elastomeres Element (60), das eine Basis (60B) aufweist, die an der radial und axial nach innen gewandten geneigten Fläche (63F) befestigt ist,
**dadurch gekennzeichnet, dass**
das elastomere Element (60) einen flexiblen Dichtungsschenkel (60L) aufweist, der sich zum abdichtenden Eingriff mit einem inneren Element (14) der Laufrollenanordnung (10) weg von der radial und axial nach innen gewandten geneigten Fläche (63F) erstreckt, wobei der flexible Dichtungsschenkel (60L) an einer Dichtungseingriffsfläche (60X) endet, wobei sich die Dichtungseingriffsfläche (60X) von dem distalen Ende (64D) des zweiten Schenkels (64) radial nach innen erstreckt;
der kranzförmige Metallring (62) und das elastomere Element (60) eine axiale Gesamtbreite (W) aufweisen, die so ausgestaltet ist, dass sie strukturelle Verstärkung und Abdichtung vorsieht, und
die Dünnprofildichtung eine erste axiale Gesamtbreite (W) aufweist, wobei die erste axiale Gesamtbreite (W) nicht mehr als 6 % der axialen Gesamtlänge (L) eines Außenrings (12) der Laufrollenanordnung (10) beträgt.

13. Laufrollenanordnung und Dünnprofildichtungsanordnung nach Anspruch 12, wobei die axiale Gesamtbreite etwa 1,905 mm (0,075 Zoll) bis etwa 2,032 mm (0,080 Zoll) beträgt, um die Vergrößerung der Rollenlänge ohne Zunahme der Gesamtlänge der Laufrollenanordnung (10) zu ermöglichen, wodurch sich eine erhöhte Belastbarkeit der Laufrollenanordnung (10) ergibt.

14. Laufrollenanordnung und Dünnprofildichtungsanordnung nach Anspruch 13, wobei der Anbringungsabschnitt (62M) eine Wulst (69) umfasst, die über einen Teil des Anbringungsabschnitts (62M) gefaltet ist und einen Bogen (67) an einem radial äußersten Teil des Anbringungsabschnitts (62M) zum Einsetzen in eine Nut (12G) eines Außenrings (12) der Laufrollenanordnung (10) bildet.

15. Laufrollenanordnung und Dünnprofildichtungsanordnung nach Anspruch 12, die in einer Laufrollenanordnung für eine Nockenfolger- oder Kreuzgelenkgabelanordnung installiert ist, wobei die Laufrollenanordnung Folgendes umfasst:
einen Außenring (12), der einen Innenbereich (13) aufweist, wobei der Innenbereich (13) durch eine Innenfläche (13A) definiert ist, die sich über eine axiale Gesamtlänge (L) zwischen einem ersten axialen Ende (13X) und einem zweiten axialen Ende (13Y) des Außenrings (12) erstreckt, wobei die Innenfläche (13A) eine radial nach innen gewandte Lagerfläche (13B1, 13B2) aufweist, die sich zwischen einem ersten sich radial nach innen erstreckenden Flansch (13F1) und einem zweiten sich radial nach innen erstreckenden Flansch (13F2) erstreckt;
ein einstückiges inneres Element (14), das sich in den Innenbereich (13) hinein erstreckt, wobei das innere Element (14) eine Nut (15) aufweist, die darin zwischen einem dritten axialen Ende (14X) und einem vierten axialen Ende (14Y) des inneren Elements (14) gebildet ist, wobei sich das innere Element (14) durchgehend zwischen dem dritten axialen Ende (14X) und dem vierten axialen Ende (14Y) erstreckt;
einen Haltering (16), der in der Nut (15) positioniert ist;
eine erste Reihe aus einer Vielzahl von ersten Rollen (20), die in dem Innenbereich (13) zwischen und in Rolleingriff mit dem inneren Element (14) und der radial nach innen gewandten Lagerfläche (13B1, 13B2) positioniert ist, wobei die erste Reihe aus der Vielzahl von ersten Rollen (20) zwischen dem Haltering (16) und dem ersten sich radial nach innen erstreckenden Flansch (13F1) positioniert ist und diese in Eingriff nimmt;
eine zweite Reihe aus einer Vielzahl von zweiten Rollen (30), die in dem Innenbereich (13) zwischen und in Rolleingriff mit dem inneren Element (14) und der radial nach innen gewandten Lagerfläche (13B1, 13B2) positioniert ist, wobei die zweite Reihe aus der Vielzahl von zweiten Rollen (30) zwischen dem Haltering (16) und dem zweiten sich radial nach innen erstreckenden Flansch (13F2) positioniert ist und diese in Eingriff nimmt;
wobei die Innenfläche (13A) ferner eine erste Dichtungsaufnahmetasche (40A) umfasst, die zwischen dem ersten sich radial nach innen erstreckenden Flansch (13F1) und dem ersten axialen Ende (13X) gebildet ist; und
eine erste kranzförmige Dichtung (50A), die in der ersten Dichtungsaufnahmetasche (40A) positioniert und darin eingesetzt ist, wobei ein Teil der ersten kranzförmigen Dichtung (50A) das innere Element (14) gleitend und abdichtend in Eingriff nimmt; **dadurch gekennzeichnet, dass**
jede der Vielzahl von ersten Rollen (20) und jede der Vielzahl von zweiten Rollen (30) eine Rollenlänge (L1) und einen Rollenaußendurchmesser (D1) aufweist;
ein Verhältnis von der Rollenlänge (L1) zum Rollenaußendurchmesser (D1) weniger als 2,8 beträgt;
der Außenring (12) einen zweiten Außendurchmesser (D) aufweist;
ein Verhältnis von dem zweiten Außendurchmesser (D) zum Rollenaußendurchmesser (D1) im Bereich von 7,25 bis 9,75 liegt.

## Revendications

1. Un ensemble de rouleaux (10) pour un galet (100) suiveur de came ou un galet (200) d'étrier, l'ensemble de rouleaux (10) comprenant :
un anneau externe (12) ayant une zone intérieure (13), la zone intérieure (13) étant définie par une surface interne (13A) s'étendant sur une longueur axiale globale (L) entre une première extrémité axiale (13X) et une deuxième extrémité axiale (13Y) de l'anneau externe (12), la surface interne (13A) ayant une surface d'appui (13B1, 13B2) tournée radialement vers l'intérieur, s'étendant entre une première bride (13F1) s'étendant radialement vers l'intérieur et une deuxième bride (13F2) s'étendant radialement vers l'intérieur ;
un élément interne (14) en une seule pièce s'étendant dans la zone intérieure (13), l'élément interne (14) ayant une gorge (15) formée à l'intérieur de lui entre une troisième extrémité axiale (14X) et une quatrième extrémité axiale (14Y) de l'élément interne (14), l'élément interne (14) s'étendant de façon continue entre la troisième extrémité axiale (14X) et la quatrième extrémité axiale (14Y) ;
un anneau de retenue (16) positionnée dans la gorge (15) ;
une première rangée d'une pluralité de premiers rouleaux (20) étant positionnée dans la zone intérieure (13) entre l'élément interne (14) et la surface d'appui (13B1, 13B2) tournée radialement vers l'intérieur, et en engagement de roulement avec ceux-ci, la première rangée de la pluralité de premiers rouleaux (20) étant positionnée entre l'anneau de retenue (16) et la première bride (13F1) s'étendant radialement vers l'intérieur et étant en engagement avec ceux-ci ;
une deuxième rangée d'une pluralité de deuxièmes rouleaux (30) positionnée dans la zone intérieure (13) entre l'élément interne (14) et la surface d'appui (13B1, 13B2) tournée radialement vers l'intérieur, et en engagement de roulement avec ceux-ci, la deuxième rangée de la pluralité de deuxièmes rouleaux (30) étant positionnée entre l'anneau de retenue (16) et la deuxième bride (13F2) s'étendant radialement vers l'intérieur et étant en engagement avec ceux-ci ;
la surface interne (13A) comprend en outre une première poche (40A) de réception de joint formée entre la première bride (13F1) s'étendant radialement vers l'intérieur et la première extrémité axiale (13X) ; et
un premier joint annulaire (50A) étant positionné et logé dans la première poche (40A) de réception de joint, une partie du premier joint annulaire (50A) venant en engagement de manière coulissante et étanche avec l'élément interne (14),
**caractérisé en ce que**
le premier joint annulaire (50A) comprend :
un anneau annulaire métallique (62) ayant une portion de montage (62M) située circonférentiellement autour d'une partie radialement la plus externe de celui-ci, l'anneau annulaire métallique (62) ayant une première branche (63) s'étendant axialement à l'opposé de la portion de montage (62M), et radialement vers l'intérieur, la première branche (63) ayant une surface inclinée (63F) tournée radialement et axialement vers l'intérieur, et l'anneau annulaire métallique (62) ayant une deuxième branche (64) s'étendant radialement vers l'intérieur à partir de la première branche (63) et se terminant à une extrémité distale (64D) ;
un élément en élastomère (60) ayant une base (60B) fixée à la surface inclinée (63F) tournée radialement et axialement vers l'intérieur, l'élément en élastomère (60) ayant une branche d'étanchéité flexible (60L) s'étendant à l'opposé de la surface inclinée (63F) tournée radialement et axialement vers l'intérieur pour un engagement avec étanchéité avec l'élément interne (14) de l'ensemble de rouleaux (10), la branche d'étanchéité flexible (60L) se terminant au niveau d'une surface (60X) d'engagement avec étanchéité, la surface (60X) d'engagement avec étanchéité s'étendant radialement vers l'intérieur depuis l'extrémité distale (64D) de la deuxième branche (64);
l'anneau annulaire métallique (62) et l'élément en élastomère (60) ayant une largeur axiale globale (W) configurée pour fournir un support structurel et une étanchéité, et chaque rouleau de la pluralité de premiers rouleaux (20) et chaque rouleau de la pluralité de deuxièmes rouleaux (30) ayant une longueur de rouleau (LI) et un diamètre extérieur de rouleau (D1);
un rapport de la longueur du rouleau (LI) au diamètre extérieur du rouleau (D1) étant inférieur à 2,8 ;
l'anneau externe (12) ayant un deuxième diamètre extérieur (D) ;
un rapport du deuxième diamètre extérieur (D) au diamètre extérieur du rouleau (D1) allant de 7,25 à 9,75, le premier joint annulaire (50A) ayant une première largeur axiale globale, la première largeur axiale globale (W) n'étant pas supérieure à 6 % de la longueur axiale totale (L) de l'anneau externe (12).

2. L'ensemble de rouleaux (10) selon la revendication 1, dans lequel la largeur axiale globale (W) va d'environ 1,905 mm (0,075 pouces) à environ 2,032 mm (0,080 pouces), pour faciliter l'extension de la longueur des rouleaux sans augmentation de la longueur globale de l'ensemble de rouleaux (10), produisant une capacité de charge accrue de l'ensemble de rouleaux (10).

3. L'ensemble de rouleaux (10) selon la revendication 2, dans lequel la portion de montage (62M) comprend un rabat (69) replié sur une partie de la portion de montage (62M) et formant un coude (67) sur une partie radialement la plus extérieure de la portion de montage (62M) destinée à être logée dans une gorge (12G) de l'anneau externe (12) de l'ensemble de rouleaux (10).

4. L'ensemble de rouleaux (10) selon la revendication 1, dans lequel :
la surface interne (13A) comprend en outre une deuxième poche (40B) de réception de joint formée entre la deuxième bride (13F2) s'étendant radialement vers l'intérieur et la deuxième extrémité axiale (13Y) ; et
un deuxième joint annulaire (50B) positionné et logé dans la deuxième poche (40B) de réception de joint, une partie du deuxième joint annulaire (50B) venant en engagement de manière coulissante et étanche avec l'élément interne (14), le deuxième joint annulaire (50B) ayant une première largeur axiale globale ; et
le deuxième joint annulaire (50B) ayant une largeur axiale globale qui n'est pas supérieure à 6 % de la longueur globale de l'anneau externe (12).

5. L'ensemble de rouleaux (10) selon la revendication 1, dans lequel le deuxième joint annulaire (50B) comprend un élément en élastomère (60) fixé à un anneau métallique annulaire (62).

6. L'ensemble de rouleaux (10) selon la revendication 1, dans lequel l'élément interne (14) comprend un acier au carbone.

7. L'ensemble de rouleaux (10) selon la revendication 1, dans lequel une partie de l'élément interne (14) a une profondeur de cémentation durcie par carburation allant de 0,762 à 1,016 mm (0,03 à 0,04 pouces).

8. L'ensemble de rouleaux (10) selon la revendication 1, dans lequel l'élément interne (14) a une dureté de surface allant de 59 à 62 sur l'échelle Rockwell C et/ou l'élément interne (14) a une dureté à cœur de 30 à 35 sur l'échelle Rockwell C..

9. L'ensemble de rouleaux (10) selon la revendication 1, dans lequel les extrémités axiales (16A, 16B) de l'anneau de retenue (16) viennent en engagement dans la gorge (15), la pluralité de premiers rouleaux (20) vient en engagement de manière coulissante avec l'une des extrémités axiales (16A, 16B) de l'anneau de retenue (16) et la pluralité de deuxièmes rouleaux (30) vient en engagement de manière coulissante avec une autre des extrémités axiales (16A, 16B) de l'anneau de retenue (16) afin de limiter le mouvement axial de l'anneau externe (12) par rapport à l'élément interne (14).

10. L'ensemble de rouleaux (10) selon la revendication 1, dans lequel l'élément interne (14) comprend un arbre (80) qui s'étend vers l'extérieur à partir d'au moins une parmi la première extrémité axiale (13X) et la deuxième extrémité axiale (13Y).

11. L'ensemble de rouleaux (10) selon la revendication 1, dans lequel l'élément interne (14) est un anneau annulaire.

12. Un ensemble de rouleaux (10) et un ensemble formant joint à profil mince,
l'ensemble de rouleaux (10) comprenant : un anneau externe (12), un anneau interne (14) et des rouleaux (30) placés entre eux,
le joint à profil mince (50B) comprenant :
un anneau annulaire métallique (62) ayant une portion de montage (62M) située circonférentiellement autour d'une partie radialement la plus externe de celui-ci, l'anneau annulaire métallique (62) ayant une première branche (63) s'étendant axialement à l'opposé de la portion de montage (62M) et radialement vers l'intérieur, la première branche (63) ayant une surface inclinée (63F) tournée radialement et axialement vers l'intérieur, et l'anneau annulaire métallique (62) ayant une deuxième branche (64) s'étendant radialement vers l'intérieur à partir de la première branche (63) et se terminant par une extrémité distale (64D) ;
un élément en élastomère (60) ayant une base (60B) fixée à la surface inclinée (63F) tournée radialement et axialement vers l'intérieur,
**caractérisé en ce que**
l'élément en élastomère (60) a une branche d'étanchéité flexible (60L) s'étendant à l'opposé de la surface inclinée (63F) tournée radialement et axialement vers l'intérieur pour un engagement avec étanchéité avec un élément interne (14) de l'ensemble de rouleaux (10), la branche d'étanchéité flexible (60L) se terminant par une surface (60X) d'engagement avec étanchéité, la surface (60X) d'engagement avec étanchéité s'étendant radialement vers l'intérieur depuis l'extrémité distale (64D) de la deuxième branche (64) ;
l'anneau annulaire métallique (62) et l'élément en élastomère (60) ayant une largeur axiale globale (W) configurée pour fournir un support structurel et une étanchéité, et le joint à profil mince ayant une première largeur axiale globale (W), la première largeur axiale globale (W) ne représentant pas plus de 6 % de la longueur axiale globale (L) d'un anneau externe (12) de l'ensemble de rouleaux (10).

13. L'ensemble de rouleaux et l'ensemble formant joint à profil mince selon la revendication 12, dans lesquels la largeur axiale globale va d'environ 1,905 mm (0,075 pouces) à environ 2,032 mm (0,080 pouces), pour faciliter l'extension de la longueur des rouleaux sans augmentation de la longueur globale de l'ensemble de rouleaux (10), produisant une capacité de charge accrue de l'ensemble de rouleaux (10).

14. L'ensemble de rouleaux et l'ensemble formant joint à profil mince selon la revendication 13, dans lesquels la portion de montage (62M) comprend un rabat (69) replié sur une partie de la portion de montage (62M) et formant un coude (67) sur une partie radialement la plus externe de la portion de montage (62M) pour se loger dans une gorge (12G) d'un anneau externe (12) de l'ensemble de rouleaux (10).

15. L'ensemble de rouleaux et l'ensemble formant joint à profil mince selon la revendication 12 monté dans un ensemble de rouleaux pour un ensemble formant galet suiveur de came ou d'étrier, l'ensemble de rouleaux comprenant :
un anneau externe (12) ayant une zone intérieure (13), la zone intérieure (13) étant définie par une surface interne (13A) s'étendant sur une longueur axiale globale (L) entre une première extrémité axiale (13X) et une deuxième extrémité axiale (13Y) de l'anneau externe (12), la surface interne (13A) ayant une surface d'appui (13B1, 13B2) tournée radialement vers l'intérieur, s'étendant entre une première bride (13F1) s'étendant radialement vers l'intérieur et une deuxième bride (13F2) s'étendant radialement vers l'intérieur ;
un élément interne (14) en une seule pièce s'étendant dans la zone intérieure (13), l'élément interne (14) ayant une gorge (15) formée à l'intérieur de lui entre une troisième extrémité axiale (14X) et une quatrième extrémité axiale (14Y) de l'élément interne (14), l'élément interne (14) s'étendant de façon continue entre la troisième extrémité axiale (14X) et la quatrième extrémité axiale (14Y) ;
un anneau de retenue (16) positionné dans la gorge (15) ;
une première rangée d'une pluralité de premiers rouleaux (20) positionnés dans la zone intérieure (13) entre l'élément interne (14) et la surface d'appui (13B1, 13B2) tournée radialement vers l'intérieur, et en engagement de roulement avec ceux-ci, la première rangée de la pluralité de premiers rouleaux (20) étant positionnée entre l'anneau de retenue (16) et la première bride (13F1) s'étendant radialement vers l'intérieur et étant en engagement avec ceux-ci ;
une deuxième rangée d'une pluralité de deuxièmes rouleaux (30) positionnée dans la zone intérieure (13) entre l'élément interne (14) et la surface d'appui (13B1, 13B2) tournée radialement vers l'intérieur, et en engagement de roulement avec ceux-ci, la deuxième rangée de la pluralité de deuxièmes rouleaux (30) étant positionnée entre l'anneau de retenue (16) et la deuxième bride (13F2) s'étendant radialement vers l'intérieur, et étant en engagement avec ceux-ci ;
la surface interne (13A) comprend en outre une première poche (40A) de réception de joint formée entre la première bride (13F1) s'étendant radialement vers l'intérieur et la première extrémité axiale (13X) ; et
un premier joint annulaire (50A) positionné et logé dans la première poche (40A) de réception de joint, une partie du premier joint annulaire (50A) étant en engagement de manière coulissante et étanche avec l'élément interne (14) ; **caractérisé en ce que**
chaque rouleau de la pluralité de premiers rouleaux (20) et chaque rouleau de la pluralité de deuxièmes rouleaux (30) ont une longueur de rouleau (L1) et un diamètre extérieur de rouleau (D1);
un rapport de la longueur du rouleau (L1) au diamètre extérieur du rouleau (D1) est inférieur à 2,8 ;
l'anneau externe (12) a un deuxième diamètre extérieur (D) ;
un rapport du deuxième diamètre extérieur (D) au diamètre extérieur de rouleau (D1) est compris entre 7,25 et 9,75.
